# EUROPÄISCHE PATENTANMELDUNG

(11) **EP 0 709 813 A1**
(43) Veröffentlichungstag der Anmeldung: **01.05.1996**
(21) Anmeldenummer: 95116715.4
(22) Anmeldetag: 24.10.1995
(51) Int. Cl.: G08B 13/14, G07F 7/02, G07G 1/00

(54) **Diebstahlsicherungs- und Kassiersystem**

(30) Priorität: 26.10.1994 DE 4438161; 26.10.1994 DE 9417158 U
(71) Anmelder: Uhrmann, Claudia, D-47198 Duisburg (DE)
(72) Erfinder: Uhrmann, Claudia, D-47198 Duisburg (DE)

(57) **Zusammenfassung**

**Patentanspruch 1**. Diebstahlsicherung

Aufgabe der Erfindung ist, das Eigengewicht vom Kunden und Personal im Eingangsbereich der Sicherungszone genau festzustellen und zu speichern, womit der Kunde und Personal den zu sichernden Bereich betreten hat.

Aufgabe der Erfindung ist, das Gesamtgewicht der Ware die der Kunde bezahlt hat an der Kasse genau festzustellen und zu speichern.

Aufgabe der Erfindung ist das Eigengewicht vom Kunden und das Gewicht der bezahlten Ware mit dem Ausgangsgewicht Kunde und Wareneinkauf zu vergleichen und Abweichungen zu melden, um eine Diebstahlkontrolle zu ermöglichen.

Aufgabe der Erfindung ist, das Gesamtgewicht Warenaufbau im Warenträger zu Kontrollieren und Abweichungen zu Melden.

Im folgenden wird die Erfindung anhand eines Beispiels und mit Bezug auf die beiliegenden Zeichnungen näher erläutert.

**Patentanspruch 2.** Kassiersystem

Aufgabe der Erfindung ist, den Personalintensiven Kassiervorgang auf den Kunden zu übertragen, und den Kunden einen überschaubaren Einkauf ( Figur 2 ) - ( 13,14,15 ) zu ermöglichen, das wird dadurch erreicht das der Kunde über einen Scanner ( Figur 2 ) seinen Einkauf selbst einscannt.

Aufgabe der Erfindung ist, die zur Zeit notwendigen und Kostenintensiven Kassenanlagen zum Teil einzusparen und die dafür genutzte Fläche als Verkaufsfläche zu gewinnen.

Im folgenden wird die Erfindung anhand eines Beispiels und mit Bezug auf die beiliegenden Zeichnungen näher erläutert.

## Beschreibung

Die Erfindung betrifft eine verbesserte Diebstahlsicherung im Handel, Produktion und Personalwesen, sowie eine verbesserte Kassierung im Verkauf.

Die derzeitige Warensicherung im Einzelhandel kann nur zum Teil mit einem großen Kosteraufwand den Diebstahl verhindern.
Die heutigen Sicherungsysteme zbsp. die "Magnetische Technologie" erlauben nur eine Warensicherung über ca. 50,00 DM unter 50,00 DM ist der Kostenaufwand nicht gerechtfertigt.
Die derzeitige Kassierung ist Kosten und Personalaufwendig.

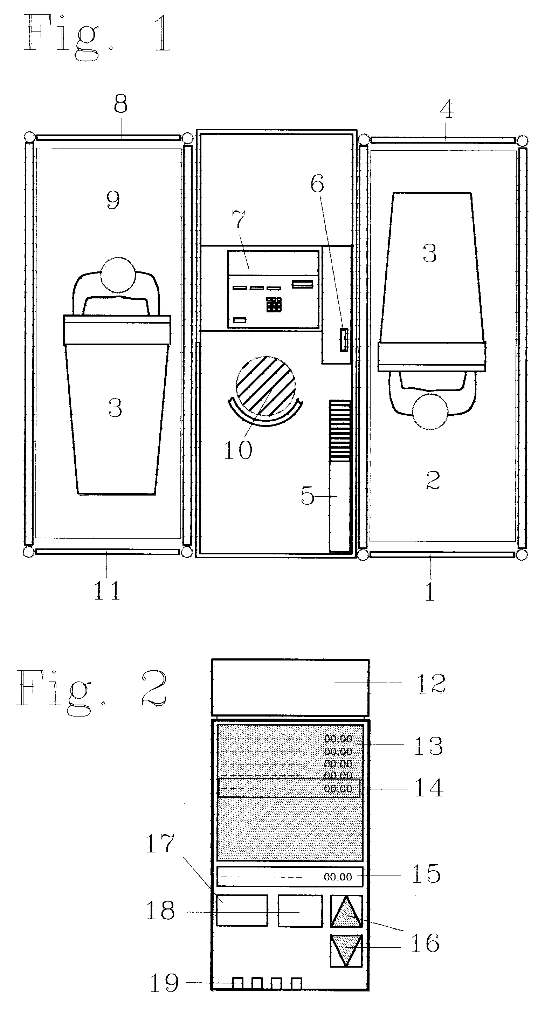

Die Erfindung der Sicherung erfolgt über datengesteuerte Bodenplattenwaagen 2 und 9 im Eingang und Ausgang "Verkauf" Fig.1.
Über ein Datenerfassungsgerät mit den Merkmalen Fig. 2.

Der im Schutzanspruch 1 angegebenen Erfindung liegt das Problem zugrunde, eine vereinfachtere und sichere Diebstahlabsicherung zu ermöglichen.
Der im Schutzanspruch 2 angegebenen Erfindung liegt das Problem zugrunde, eine schnellere und leichtere Kassierung zu ermöglichen..
Dieses Problem wird mit den im Schutzbereich 1+2 aufgeführten Merkmalen ( ggf. wörtliche Zitierung der Merkmale) gelöst.

Ein **Ausführungsbeispiel** der Erfindung wird anhand der Figur 1 bis 2 erläutert.

Es zeigen:
- Fig. 1.: Kasse Ein und Ausgang mit Bodenplattenwaagen 2 und 9
- Fig. 2.: Datenerfassungsgerät mit Scanner und deren Funktion

1. Fig.1 Der Kunde betritt mit einem Warenkorb die Eingangswaage, Gesamtgewicht ( Kunde 70 kg, Warenkorb 8 kg) = 78 kg
2. Der Kunde entnimmt das Datenerfassungsgerät Fig.2,Portamat Eingang schließt.
3. Der Kunde führt das Datenerfassungsgerät im Datenübertragungsgerät, Datenübertragungsgerät sichert das Eingangsgewicht Kunde + Warenkorb im Datenerfassungsgerät = 78 kg und öffnet die Portamatanlage Eingang Verkauf.
4. Der Kunde scannt zbsp. 10 Warenartikel im Datenerfassungsgerät ( Text,Summe,Gewicht.) zu 49,50 DM mit einem Gesamtgewicht von 6,5 kg = 6,5 kg
5. Nach getätigten Einkauf betritt Der Kunde mit seinen Warenkorb die Datengesteuerte Ausgangswaage und überreicht das Datenerfassungsgerät an die Kassiererin, die Kassiererin führt das Datenerfassungsgerät in die Datenkasse, der Rechner "Kasse" übernimmt die Daten vom Datenerfassungsgerät ( Text,Summe,Gewicht,usw. ) Addition 78 kg + 6,5 kg = 84,5 kg
6. Der Rechner in der Datenkasse übernimmt die Gewichtemessung der Ausgangswaage = 84,5 kg
7. Der Rechner vergleicht die Dateneingabe vom Gewicht der Pos. 5. mit dem Gewicht der Pos. 6. = 00,0 kg und öffnet dann die Portamatanlage zum Ausgang.

### Diebstahlsicherungs - und Kassiersystem

Bei der Diebstahlsicherung und dem Kassiersystem,betritt Der Kunde ( Warenkorb ) die Schleuse - Eingangswaage und nimmt ein Datenerfassungsgerät mit Scanner ( Fig. 2 ), führt das Datenerfassungsgerät im Dateneingabegerät ( 6 ), das Dateneingabegerät sichert das Eingangsgewicht Kunde + Warerkorb im Datenerfassungsgerät und öffnet dann die Portamatanlage Eingang ( 4 ) zum Verkauf.

Der Kunde geht zum Einkauf, scannt seinen Einkauf im Datenerfassungsgerät ( Text,Summe,Gewicht,usw.)

Nach getätigten Einkauf betritt Der Kunde mit Warenkorb die Schleuse der Datengesteuerten - Ausgangswaage, und überreicht das Datenerfassungsgerät an die Kassiererin, die Kassiererin führt das Datenerfassungsgerät in die Datenkasse.
Der Rechner in der Kasse übernimmt die Daten vom Datenerfassungsgerät ( Text,Summe,Gewicht -,usw. ), das gesicherte Gewicht Kunde und (Warenkorb) aus der Schleuse Eingangswaage im Datenerfassungsgerät ,und das Gesamtgewicht der Ausgangswage (Kunde, Warerkorb, und Warengewicht), dann vergleicht der Rechner die Dateneingaben auf stimmigkeit.

Bei Stimmigkeit der Daten öffnet der Rechner die Schleuse Portamat Ausgang.

Bei Unstimmigkeit hinweis an Kassiererin über Kassendisplay, Schleuse bleibt geschlossen

Mit der Erfindung wird erreicht ,daß statt einer Vielzahl von unterschiedlichen nur zum Teil sichernde Systeme, an der Ware und im Verkauf nur eine Sicherung"Ein und Ausgang"notwendig ist, und eine Personalvereinfachte und schnellere Kassierung möglich wird, da das Personal die Ware nicht einscannt, und der Kunde die Ware nicht mehr auf das Kassenband legen muß.
Anwendungen zbsp. auch in Produktion und Warenwirtschaftsbetriebe.

### Bezugzeichenliste: Fig. 1 und Fig. 2

### Fig. 1

- Pos. 1: Portamat Schleuse Eingang
- Pos. 2: Bodenplanenwaage Eingang ( Datengesteuert )
- Pos. 3: Kunde mit Warenkorb
- Pos. 4: Portamat Eingang Verkauf
- Pos. 5: Ausgabe Datengerät
- Pos. 6: Eingabegerät ( Datengerät )
- Pos. 7: Datenkasse - Rechner
- Pos. 8: Portamat Schleuse Ausgang
- Pos. 9: Bodenplattenwaage Ausgang ( Datengesteuert )
- Post 10: Drehstuhl
- Pos. 11: Portamat Ausgang

### Fig. 2

- Pos. 12: Scanner
- Pos. 13: Display Text und Preis der Artikel
- Pos. 14: Crollfeld
- Pos. 15: Endsumme Einkauf, Text und Gesamtsumme
- Pos. 16: Crolltasten
- Pos. 17: Eingabetaste Scanner
- Pos. 18: Löschtaste Scanner
- Pos. 19: Datenspeicher und Datenübertragungsmodul

## Patentansprüche

1. Diebstahlsicherungen durch einen Vergleich der Eingangsgewichte und Ausgangsgewichte der Kunden und Ware, zbsp.im Ein und Ausgang des zu Sichernden Bereiches.

2. Einkauf und Kassierung über Scanner im Datenerfassungsgerät durch Kundeneingabe der Artikel - Codierungen, ( Gewicht, Preis, Summe usw. ).
